(19) Europäisches Patentamt

European Patent Office

Office européen des brevets

(11) **EP 4 546 633 A1**

(12) **EUROPEAN PATENT APPLICATION**

(43) Date of publication:
**30.04.2025 Bulletin 2025/18**

(21) Application number: **23205701.8**

(22) Date of filing: **25.10.2023**

(51) International Patent Classification (IPC):
*H02M 3/335* (2006.01)      *H02M 3/337* (2006.01)
*H02M 3/00* (2006.01)        *H02M 1/00* (2006.01)

(52) Cooperative Patent Classification (CPC):
**H02M 3/01; H02M 1/0025; H02M 1/0058;
H02M 3/33571; H02M 3/33592; H02M 3/3376**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NXP USA, Inc.
Austin TX 78735 (US)**

(72) Inventors:
• **HALBERSTADT, Hans
5656 AG Eindhoven (NL)**

• **LAMMERS, Matheus Johannus Gerardus
5656 AG Eindhoven (NL)**
• **RENS, Frank van
5656 AG Eindhoven (NL)**

(74) Representative: **Hardingham, Christopher Mark
NXP Semiconductors
Intellectual Property Group
The Cattle Barn
Upper Ashfield Farm, Hoe Lane
Romsey, Hampshire S051 9NJ (GB)**

Remarks:
Amended claims in accordance with Rule 137(2)
EPC.

(54) **A CONTROLLER FOR A RESONANT CONVERTER**

(57)      A controller for a resonant converter. The controller is configured to: receive a measured current signal that represents current flowing in the resonant tank; receive a measured voltage signal that represents the voltage at a predetermined point in the resonant tank; receive a power setting signal, which defines a requested power level for the load; set a protected power signal based on a time delay between a change in state of one of first and second switches and a subsequent zero-crossing of the measured current signal; set an upper voltage threshold value and a lower threshold value based on the lower of: i) the protected power signal; and ii) the power setting signal; in response to the measured voltage signal exceeding the upper voltage threshold value, open the first switch and close the second switch; and in response to the measured voltage signal dropping below the lower voltage threshold value, open the second switch and close the first switch.

FIG. 3

# EP 4 546 633 A1

**Description**

**Field**

The present disclosure relates to controllers for resonant converter, and associated methods.

**Summary**

According to a first aspect of the present disclosure there is provided a controller for a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor;

wherein the controller is configured to:

receive a measured current signal that represents the current flowing in the resonant tank;
receive a measured voltage signal that represents the voltage at a predetermined point in the resonant tank;
receive a power setting signal, which defines a requested power level for the load;
set a protected power signal based on a time delay between a change in state of one of the switches and a subsequent zero-crossing of the measured current signal;
set an upper voltage threshold value and a lower threshold value based on the lower of: i) the protected power signal; and ii) the power setting signal;
in response to the measured voltage signal exceeding the upper voltage threshold value, open the first switch and close the second switch; and
in response to the measured voltage signal dropping below the lower voltage threshold value, open the second switch and close the first switch.

Setting the upper voltage threshold value and the lower threshold value in this way can advantageously reduce the likelihood of the resonant converter entering into a capacitive mode of operation, thereby improving the performance of the resonant converter.
In one or more embodiments, the protected power signal corresponds to a power level at which the measured voltage signal will intersect: the upper voltage threshold value during the high-side switch half cycle; and the lower voltage threshold value during the low-side switch half cycle.
In one or more embodiments, the protected power signal is set such that its application results in:

a fixed distance between the end of a switch half cycle and the next zero-crossing of the measured current signal; or
an adaptive distance between the end of a switch half cycle and the next zero-crossing of the measured current signal.

In one or more embodiments, the distance is represented by a time delay.
In one or more embodiments, the distance is represented as the value of an integration of the measured current signal between: the time at which the state of one of the switches changes; and the time at which the measured current signal next crosses zero.
In one or more embodiments, the controller is further configured to:
set the protected power signal based on the lower of:

i) a time delay between a change in state the first switch and a subsequent zero-crossing of the measured current signal; and
ii) a time delay between a change in state the second switch and a subsequent zero-crossing of the measured current signal

In one or more embodiments, operation of the resonant converter according to the protected power signal results in a predetermined time delay between the change in state of one of the switches and the subsequent zero-crossing of the measured current signal.

In one or more embodiments, operation of the resonant converter according to the protected power signal results in a predetermined phase delay between the change in state of one of the switches and the subsequent zero-crossing of the measured current signal, wherein the phase delay corresponds to a proportion of a switch cycle.

In one or more embodiments, the controller is further configured to:

set the protected power signal based the integration of the measured current signal between: the time at which the state of one of the switches changes state; and the time at which the measured current signal next crosses zero.

In one or more embodiments, operation of the resonant converter according to the protected power signal results in a predetermined value for the integration of the measured current signal between: the time at which the state of one of the switches changes; and the time at which the measured current signal next crosses zero.

In one or more embodiments, the controller is further configured to set the protected power signal based on the lower of:

i) the integration of the measured current signal between: the time at which the state of the first switch changes; and the time at which the measured current signal next crosses zero; and
ii) the integration of the measured current signal between: the time at which the state of the second switch changes; and the time at which the measured current signal next crosses zero.

In one or more embodiments, the controller is configured to set the protected power signal based on the lower of:

i) the integration of the measured current signal between: the time at which the first switch is opened; and the time at which the measured current signal next crosses zero; and
ii) the integration of the measured current signal between: the time at which the second switch is opened; and the time at which the measured current signal next crosses zero.

In one or more embodiments, the controller is configured to:

convert the time delay into a detected proportion of a switch cycle; and
set the protected power signal based on the detected proportion of the switch cycle.

There is also disclosed a resonant converter comprising any controller disclosed herein.

According to a further aspect of the disclosure, there is provided a method of operating a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor;

wherein the method comprises:

receiving a measured current signal that represents the current flowing in the resonant tank;
receiving a measured voltage signal that represents the voltage at a predetermined point in the resonant tank;
receiving a power setting signal, which defines a requested power level for the load;
setting a protected power signal based on a time delay between a change in state of one of the switches and a subsequent zero-crossing of the measured current signal;
setting an upper voltage threshold value and a lower threshold value based on the lower of: i) the protected power signal; and ii) the power setting signal;
in response to the measured voltage signal exceeding the upper voltage threshold value, opening the first switch and closing the second switch; and
in response to the measured voltage signal dropping below the lower voltage threshold value, opening the second switch and closing the first switch.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

Figure 1 shows a resonant converter as part of a total power supply;
Figure 2 illustrates the basic principle of capacitor voltage control, with a resonant capacitor at ground side (split-up), for a resonant converter;
Figure 3 shows an example embodiment of a resonant converter, which includes a controller according to the present disclosure;
Figure 4 shows a timing diagram that illustrates the operation of the resonant converter of Figure 3 if the capacitive mode feedback loop is not enabled;
Figure 5 shows plots of the half bridge node (Vhb, upper curves) and resonant current (Icr, lower curves);
Figure 6 shows a top level block diagram of a time based capacitive mode control interface;
Figure 7 shows a detailed block diagram of a time based capacitive mode control loop;
Figure 8 shows a detailed block diagram of the delay measurement setup, between Vhb commutation and zero crossing of the resonant current;
Figure 9 shows how to measure the actual delay dT and how to average it with an IIR function to get Tmeet;
Figure 10 shows a min delay function and error signal function;
Figure 11 shows a block diagram that represents the calculation of the phase error and connection to a capacitive mode control loop;
Figure 12 shows a power control block diagram;
Figure 13 shows the relationship between the converter switching period and DCM-CCM mode; and
Figure 14 shows an example embodiment of a method of operating a resonant converter according to the present disclosure.

## Detailed Description

The present disclosure relates to a resonant power converter including a regulated capacitive mode prevention control function. As will be discussed below, examples disclosed herein can reduce the likelihood of capacitive mode oscillations by decreasing the power of the converter to maintain a certain distance from the capacitive mode border.

A resonant power converter can use a half cycle by half cycle switch off mechanism that involves sensing of the resonant capacitor voltage (Vcap) and comparing Vcap to a power reference level of the closed loop operation. This can be referred to as capacitor voltage control. Instead of directly controlling the switches by forcing a switching frequency, the switching frequency results from the Vcap control mechanism.

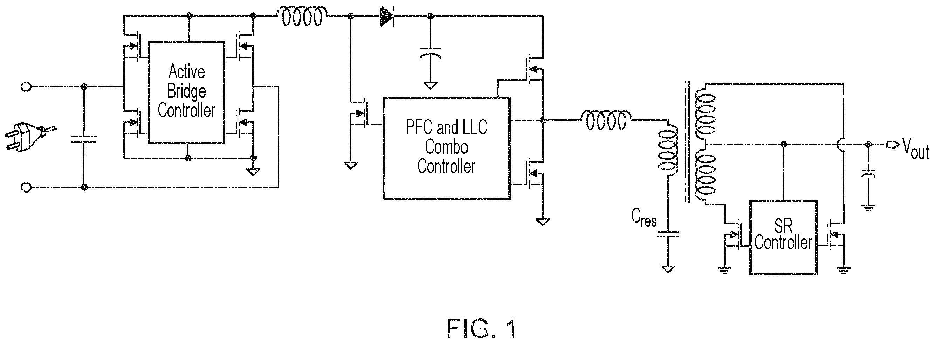

Figure 1 shows a resonant converter as part of a total power supply, which is used in an adapter in this example. The adapter includes the following blocks:

- an active bridge controller (mains rectification);
- a PFC controller part (power factor correction using a boost converter architecture);
- a resonant LLC controller part (drives the half bridge stage plus LLC resonant tank including a tapped winding transformer); and
- an SR controller (synchronous rectifier stage to make a rectified output voltage Vout).

The resonant converter can be dimensioned using first harmonic approximation. Furthermore, controlling the output power using a capacitor voltage control method can provide the following advantages:

- Possibility to use dedicated low power modes.
- Much better dynamics because the delivered power almost instantly follows the setpoint for the resonant tank variables. This simplifies the control loop design.

The resonant converter can have a resonant capacitor in series with the half bridge node, and the information for controlling the switches can be derived from the voltage across the resonant capacitor (the side that is not connected to the half bridge node).

This method actually senses the voltage across the transformer, and therefore the DC component of the sensed signal is zero. In some applications, the high voltage signal at the resonant capacitor / transformer node should be attenuated to a low voltage signal that can be processed by an IC (integrated circuit). For this purpose, a capacitive divider can be used because a resistive divider would give an undesired low pass filtering. Due to the fact that the DC component is zero, no information about the DC component is needed so a capacitive divider (not able to transfer a DC component) is sufficient.

As an alternative, the resonant capacitor can also be placed in the ground branch, in series with the primary coil of the transformer, as shown in Figure 1.

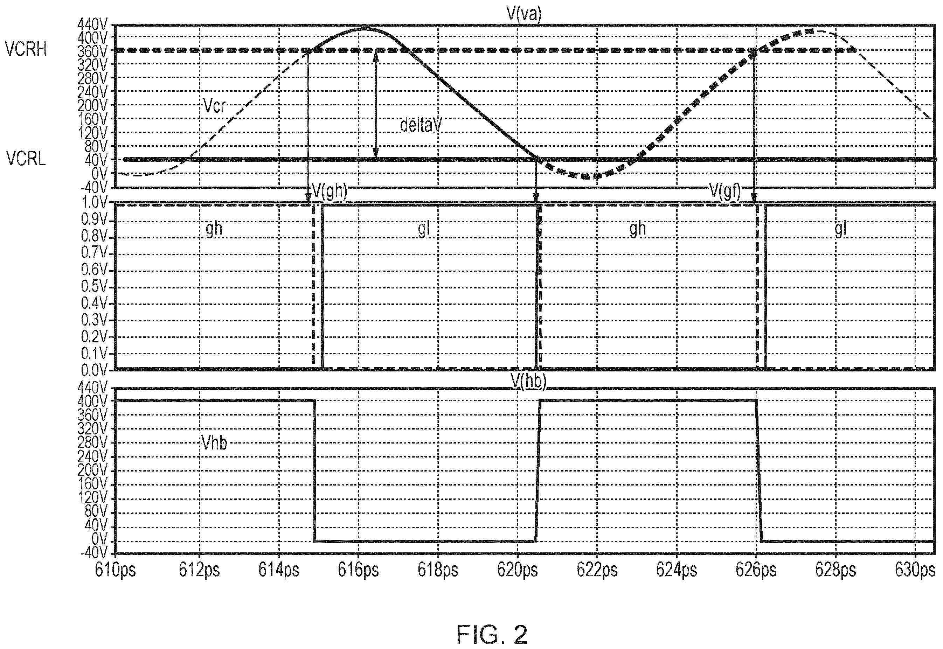

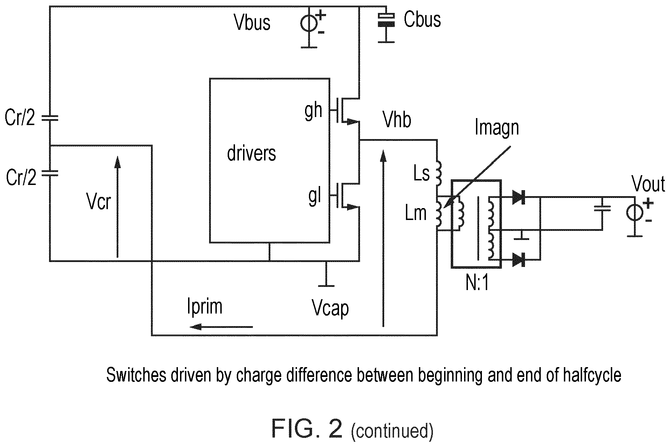

Figure 2 illustrates the basic principle of capacitor voltage control, with a resonant capacitor at ground side (split-up), for a resonant converter. That is, the resonant capacitor is split between ground and a voltage supply (Vbus) in order to reduce ripple currents in the ground and supply path.

Figure 2 also shows the timing control principle for the switches with this implementation.

The resonant converter of Figure 2 includes a controller (not shown), which operates first and second series-arranged, controllable switches. These switches are connected between a supply source (Vbus) and a reference terminal (ground). The controller controls a first, high-side, switch with a signal that is labelled as gh. The controller controls a second, low-side, switch with a signal that is labelled as gl. The voltage at the half-bridge node (the node between the high-side switch and the low-side switch) is labelled as Vhb.

The controller receives a measured voltage signal (Vcr) that represents the voltage at a predetermined point in the resonant tank. In this example, the measured voltage signal (Vcr) represents the voltage across the resonant capacitor. As shown in Figure 2, the controller compares the measured voltage signal (Vcr) with an upper voltage threshold value (VCRH) and a lower threshold value (VCRL). Based on that comparison, a switch half cycle is ended. More particularly, in response to the measured voltage signal (Vcr) exceeding the upper voltage threshold value (VCRH), the second, low-side, switch is closed and the first, high-side, switch is opened. In response to the measured voltage signal (Vcr) dropping below the lower voltage threshold value (VCRL), the second, low-side, switch is opened and the first, high-side, switch is closed. It will be appreciated that the polarity of the signals can be reversed in an alternative implementation of a full bridge such that: the second, low-side, switch is closed and the first, high-side, switch is opened in response to the inverted measured voltage signal (Vcr) dropping below a lower voltage threshold value; and the second, low-side, switch is opened and the first, high-side, switch is closed in response to the measured voltage signal (Vcr) exceeding an upper voltage threshold value. In this example, a non overlap time is implemented after opening one of the switches before the other one is closed. In this way, there is a slight delay between one half cycle ending and the next half cycle starting. For simplicity, the attenuation of the Vcr voltage for the controller IC is not included in Figure 2.

For the plots that are shown in Figure 2, the resonant converter uses an input voltage Vbus of 400V, and therefore Vhb switches between 400V and 0V. For this example:

$$deltaV = 360 - 40 = 320V;$$

$$VCRH = Vbus/2 + deltaV/2 = 200 + 160 = 360V;$$

and

$$VCRl = Vbus/2 - deltaV/2 = 200 - 160 = 40V.$$

gh and gl have an amplitude of 1V, which is a convenient representation for true=1 and false=0.

The setup of Figure 2 also takes the DC component of the resonant capacitor into account. The DC component is defined by the input voltage of the half bridge (Vbus) multiplied by the duty cycle of the half bridge voltage (typically Vbus / 2 at 50% duty cycle operation).

Due to parasitics, in practice a capacitive divider cannot represent the DC component of the resonant capacitor due to leakage and a resistive divider cannot reliably attenuate the high frequency part of the Vcr signal due to parasitic capacitances. With a resistive and capacitive divider in parallel it is difficult to keep the same attenuation ratio due to component tolerances. The DC component across a capacitive divider (with optionally a resistive divider in parallel) can be recovered in a practical circuit by adding a so called symmetry loop.

A symmetry loop compares the measured duty cycle with a desired value of 50% and corrects the capacitive divider DC component such that 50% duty cycle is achieved. The switching together with the divider creates a DC component at the divider. This DC component together with the vcrh and vcrl levels defines a duty cycle and symmetry / asymmetry. A DC symmetry loop senses the duty cycle and regulates the DC value such that a 50% duty cycle occurs with symmetrical half cycles. The symmetry loop can rely on finishing each half cycle by Vcr crossing one of the thresholds (VRCH or VCRL) such that a direct dependency remains with the divided resonant capacitor voltage. This includes the DC level and the difference between the two threshold levels (VRCH or VCRL).

We include below a calculation for the converted power of the resonant converter of Figure 2 as a function of deltaV, which is the difference between the two threshold levels VCRH and VCRL (these thresholds can also be referred to as vcaph and vcapl).

- deltaV across Cr between beginning and end of each half cycle => Charge difference

  ○ Power=average current x input voltage=I x Vbus
  ○ I=Q x Fswitch
  ○ Q=Cr x deltaV
  ○ Power=Cr x deltaV x Fswitch x Vbus can be set per switching cycle

It can be seen that the converted energy per switching cycle is directly proportional to deltaV.

The transfer function of an LLC resonant tank circuit shows a frequency response with two characteristic peaks. Typically the LLC converter operates in a region where the transfer function is dominated by the inductance of the circuit. This mode of operation is referred to as the inductive mode, and will result in a safe operation with zero voltage switching of the converter.

During operation, the steady state operating point shifts across the voltage gain transfer curve, depending on e.g. the load current and input bus voltage (Vbus), in order to deliver the required power at the desired output voltage. If the operating point gets close to the low frequency resonance peak or when it goes below, the converter is said to operate in capacitive mode. If no measures are taken, the result is a large asymmetry between the rectified half cycles of the secondary current. This is because the symmetry loop controls the symmetry via the capacitor voltage control, but since the circuit is in capacitive mode the capacitor voltage control is overruled. Therefore, the symmetry loop gets open loop and therefore is not able to properly control the symmetry.

During a voltage or current transient, the converter's operating frequency shifts across the transfer function and eventually settles at a stable steady state point, depending on load conditions. It is possible that the operating point shifts too much in the direction of lower frequencies, caused by changes in input voltage, load current or output voltage. This can lead to unstable behaviour of the converter because the operating point gets too close to the capacitive mode of operation.

If the converter gets unstable due to operating too close to the capacitive mode setpoint, a large change in input voltage or load current is required to recover from this situation and get back again to a stable operating point.

Although the converted energy per switching cycle is directly proportional to deltaV, it cannot be guaranteed that this energy transfer can be realized under all circumstances.

When deltaV increases, this results in a larger resonance amplitude. However, a larger amplitude also results in the resonant current getting closer to zero at the end of each half cycle. If the moment that the resonant current gets to zero coincides with finishing the half cycle, this is called the capacitive mode border. Since the dv/dt of Vcr is proportional to the resonant current, larger power transfers are not possible. This means that the Vcr voltage of Figure 2 would not be able to reach the VCRH and VCRL levels because the peak of the Vcr voltage cannot go any higher. In other words, when the resonant current crosses zero before a half cycle is finished, the Vcap peak-to-peak voltage is too small and stays in between VCRH and VCRL. Once the current has crossed zero, the Vcr voltage level will start to decrease or increase in the opposite direction towards the DC level.

In more detail, the region around the capacitive mode can be split up in two sub-regions:

- <u>Near capacitive mode:</u> partly hard switching while the primary current at the start of the half bridge slope is still in the proper direction to (partly) charge the half bridge node towards the opposite supply rail.
- <u>Capacitive mode:</u> full hard switching while the primary current at the beginning of the half bridge slope is already in the opposite direction (capacitive mode is destructive for switches).

Examples of the present disclosure reduce the energy transfer per switching cycle using a so-called capacitive mode feedback loop if control using a normal regulation loop is expected to cause the resonant converter to operate too close to the capacitive mode of operation. The capacitive mode feedback loop reduces the energy transfer only when required, due to limited operating conditions.

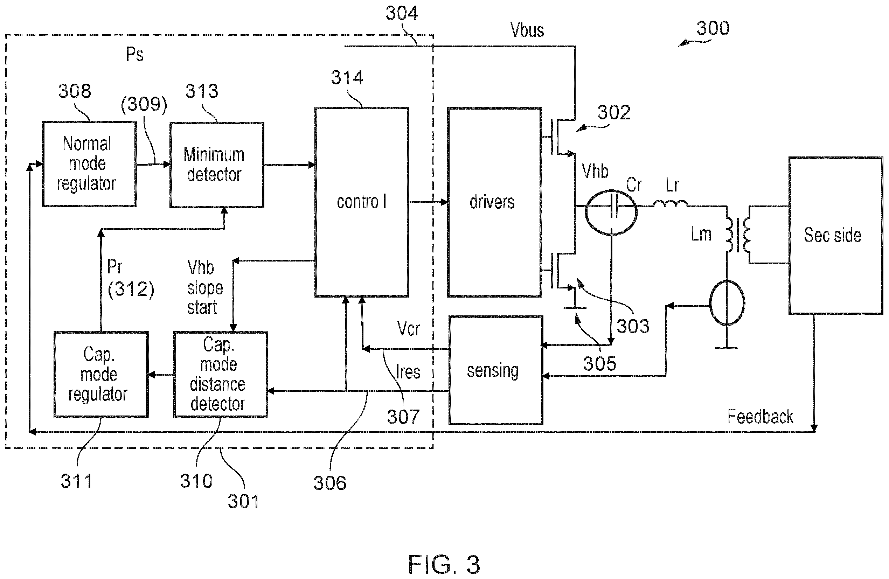

Figure 3 shows an example embodiment of a resonant converter 300, which includes a controller 301 according to the present disclosure. The resonant converter 300 is for supplying electrical energy from a supply source (Vbus) to a load at a secondary side of a transformer. The resonant converter 300 is controlled by the capacitor voltage control method that is described above with reference to Figure 2.

The resonant converter includes a first switch 302 and a second switch 303 connected in series with each other between the supply source (Vbus) 304 and a reference terminal (ground in this example) 305. The resonant converter 300 has a high-side switch half cycle when the first switch 302 is closed and the second switch 303 is open. The resonant converter also has a low-side switch half cycle when the first switch 302 is open and the second switch 303 is closed. The resonant converter 300 also has a resonant tank that is electrically connected to the first and second switches 302, 303. In this example, the resonant tank includes a resonant capacitor (Cr) and two inductors (Lr and Lm, where the resonant inductor Lr is normally defined by the leakage inductance of the transformer), one of which is a primary winding of the transformer. The transformer has a secondary winding that is connected to a secondary side of the resonant converter 300. Therefore, the resonant converter 300 of Figure 3 is an LLC converter (because the resonant tank includes two inductors and a capacitor), although it will be appreciated that examples disclosed herein can be used with different types of resonant converters having different types of resonant tanks.

The controller 301 receives a measured current signal (Ires) 306, which represents the current flowing in the resonant tank. In this example, the current flowing through Cr and Lr is sensed to provide the measured current signal (Ires) 306. However, it will be appreciated that in other examples the current in the resonant tank can be sensed at a different location. The controller 301 also receives a measured voltage signal (Vcr) 307, which represents the voltage at a predetermined point in the resonant tank. In this example, the voltage dropped across the resonant capacitor (Cr) is sensed to provide the measured voltage signal (Vcr) 307. However, it will be appreciated that in other examples the voltage dropped across different components in the resonant tank can be sensed.

In this example, the controller 301 includes a normal mode regulator functional block 308. The normal mode regulator 308 processes a feedback signal from the secondary side of the resonant converter, in order to provide a power setting signal (Ps). The power setting signal (Ps) defines a requested power level for the load. Therefore, in this example the power setting signal (Ps) is generated by the controller 301 itself. In other examples, the controller 301 can receive the power setting signal (Ps) from another component associated with the resonant converter 300.

The controller 301 in this example also includes a capacitive mode distance detector 310 and a capacitive mode regulator 311, which together set a protected power signal (Pr). The protected power signal is based (directly or indirectly) on a time delay between a change in state of one of the switches and a subsequent zero-crossing of the measured current signal (Ires) 306. The capacitive mode distance detector 310 receives a Vhb slope start signal, which provides an indication of when one of the switches 302, 303 changes state. It will be appreciated that a change in the voltage at the half-bridge node is just one of a number of ways in which a change in state of one of the switches 302, 303 can be detected. The capacitive mode distance detector 310 also receives the measured current signal (Ires) 306 such that it can identify a zero-crossing of the measured current signal (Ires) 306 subsequent to the change in state of one of the switches 302, 303. As will be discussed in detail below, the controller 301 can set the protected power signal (Pr) 312 directly based on the time delay between a change in state of one of the switches and a subsequent zero-crossing of the measured current signal (Ires) 306. Alternatively, the controller 301 can set the protected power signal (Pr) 312 based the integral of the measured current signal (Ires) between: the time at which the state of one of the switches changes state; and the time at which the measured current signal next crosses zero; thereby setting the protected power signal indirectly based on the time delay between the change in state of one of the switches and the subsequent zero-crossing of the measured current signal.

The controller 301 of Figure 3 also includes a minimum detector block 313, which selects the lowest one of: i) the protected power signal (Pr) 312; and ii) the power setting signal (Ps) 309. The minimum detector block 313 then provides that signal to a control block 314. The control block 314 sets an upper voltage threshold value (VCRH) and a lower threshold value (VCRL) based on the lower of: i) the protected power signal (Pr) 312; and ii) the power setting signal (Ps) 309. In this way, the protected power signal (Pr) 312 can takeover if the power setting signal (Ps) 309 gets too high such that operation of the resonant converter is considered too close to the capacitive mode border. As will be discussed in detail below, setting the upper voltage threshold value (VCRH) and the lower threshold value (VCRL) in this way can advantageously reduce the likelihood of the resonant converter 300 entering into a capacitive mode of operation, thereby improving the performance of the resonant converter 300.

In the same way as discussed above, the controller 301 then operates the first and second switches 302, 303 as follows:

- in response to the measured voltage signal (Vcr) 305 exceeding the upper voltage threshold value (VCRH), opening the first switch 302 and closing the second switch 303; and
- in response to the measured voltage signal (Vcr) 305 dropping below the lower voltage threshold value (VCRL), opening the second switch 303 and closing the first switch 302 (could be a non-overlap delay between the 2 switch operations).

Also in the same way that is discussed above, a non overlap time can be implemented after opening one of the switches before the other one is closed.

The capacitive mode distance detector 310 and the capacitive mode regulator 311 are implemented such that when the measured distance between the change in state of one of the switches and the subsequent zero-crossing of the measured current signal (which may simply be the detected time delay, or a parameter that is derived from the detected time delay such as the integration of the measured current signal (Ires) 306 over that period) drops below a predefined threshold, the controller reduces the deltaV level. The example of Figure 3 performs this functionality by causing the capacitive mode regulation loop (that provides the protected power signal (Pr) 312) to takeover from the normal feedback control loop (that provides the power setting signal (Ps) 309). In this situation, the capacitive mode feedback loop regulates the output power of the resonant converter 300 such that the converter keeps operating at a predefined proximity to the capacitive mode. That is, without being too close to the capacitive mode. In this way, it is possible to reduce the power and maintain a predefined safe distance to the capacitive mode border. This is achieved by using the same control mechanism with the VCRH and VCRL levels for defining the end of the switching half cycles. When the operating conditions that caused the normal control feedback control loop to approach the capacitive mode of operation are removed, the deltaV level control is automatically taken over by the normal feedback loop because the power setting signal (Ps) 309 will drop back below the protected power signal (Pr) 312.

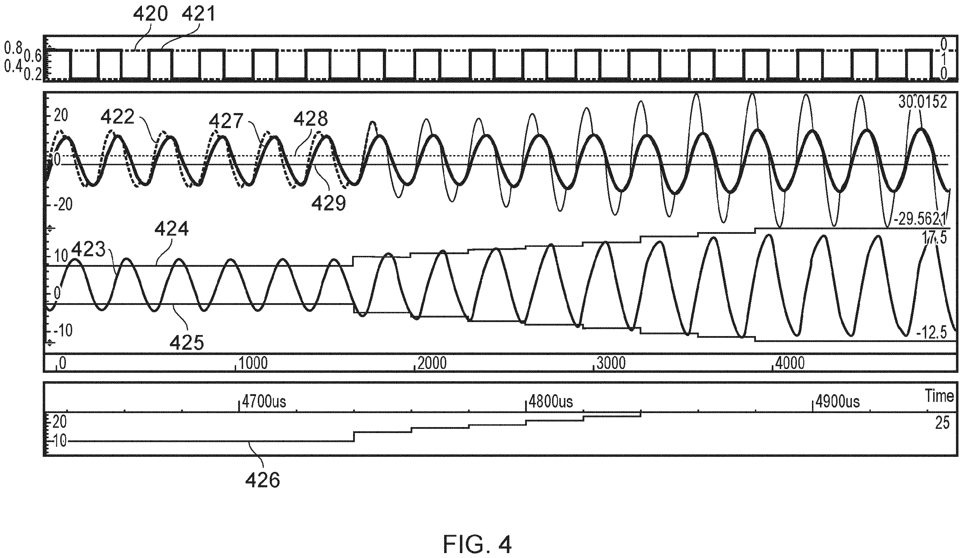

Figure 4 shows a timing diagram that illustrates the operation of the resonant converter of Figure 3 if the capacitive mode feedback loop is not enabled. That is, the first and second switches of the resonant converter are controlled by the normal feedback control loop. Time is shown on the horizontal axis for each of the plots of Figure 4.

The uppermost plot in Figure 4 shows the control signals for the first and second switches. The control signal for the first, high-side, switch (gh) is identified by reference number 420. The control signal for the second, low-side, switch (gl) is identified by reference number 421.

The current through the resonant tank (Ires) 422 is shown in the second plot. Also shown in the second plot are: the magnetizing current 427, an upper current threshold (Iend_pos) 428, and a lower current threshold (Iend_neg) 429.

The third plot in Figure 4 shows the measured voltage signal (Vcr) 423, along with the upper voltage threshold value (VCRH) 424 and the lower threshold value (VCRL) 425.

Finally, the lowermost plot in Figure 4 shows the value of deltaV 426; i.e., the difference between the upper voltage threshold value (VCRH) 424 and the lower threshold value (VCRL) 425.

Figure 4 shows that as the power requested by the load increases, as provided by an increasing value for the power setting signal (Ps), the value for deltaV 426 also increases. For about the first two-thirds of the plots shown in Figure 4, the measured voltage signal (Vcr) 423 is able to reach the upper voltage threshold value (VCRH) 424 and the lower threshold value (VCRL) 425. As discussed above, it is the intersections between the measured voltage signal (Vcr) 423 and one of the threshold values (VCRH, VCRL) 424, 425 that triggers the controller of the resonant converter to change the state of the first and second switches (as shown in the uppermost plot in Figure 4). However, for about the last third of the plots that are shown in Figure 4, the measured voltage signal (Vcr) 423 does not reach the upper voltage threshold value (VCRH) 424 and the lower threshold value (VCRL) 425. This means that the resonant converter is undesirably operating in the capacitive mode of operation. For the plots of Figure 4, in this mode of operation the controller of the resonant converter changes the state of the first and second switches when the current through the resonant tank (Ires) 422 crosses: the upper current threshold (Iend_pos) 428 for a high-side switch half cycle, and the lower current threshold (Iend_neg) 429 for a low-side switch half cycle.

An advantage of the capacitive mode feedback loop of Figure 3 is that the resonant converter is less likely to enter the capacitive mode, during which Vcr 423 does not reach the upper and lower threshold values (VCRH, VCRL) 424, 425. Although not shown in Figure 4, this is because the level of the protected power signal (Pr) is set such that, if the normal feedback control were to provide a power setting signal (Ps) that would cause deltaV to be unachievable, it would exceed the value of the protected power signal (Pr). Therefore, the protected power signal (Pr) would become lower than the power setting signal (Ps). In which case, it is the protected power signal (Pr) that is used to set the values of the upper voltage threshold value (VCRH) and the lower voltage threshold value (VCRL), and therefore also set deltaV. Therefore, the protected power signal (Pr) can be set at a value that prevents the resonant converter from entering the capacitive mode of operation. In other words, the protected power signal (Pr) corresponds to a power level at which the measured voltage signal (Vcr) 423 will intersect: the upper voltage threshold value (VCRH) during the high-side switch half cycle; and the lower voltage threshold value (VCRL) during the low-side switch half cycle.

Furthermore, use of the capacitive mode feedback loop of Figure 3 means that the resonant converter is less likely to finish a switch half cycle by: Ires 422 crossing Iend_pos 428 or Iend_neg 429 during some half cycles; and by Vcr 423 crossing VCRH 424 or VCRL 425 for other half cycles. Such switching would lead to irregular switching behavior, and would also result in complications with the symmetry loop because the symmetry loop relies on two sided Vcr 423 control (that is, the end of both half cycles being defined by Vcr 423 crossing VCRH 424 or VCRL 425).

We will now provide further details of regulated capacitive mode prevention methods where the energy transfer per switching cycle gets reduced and controlled via a capacitive mode feedback loop. The loop reduces the energy transfer only when required, due to limiting operating conditions. The control loop can check the distance to the capacitive mode border based on either time (phase) or area (charge) measurements. "Distance" in this context can be considered as being based directly or indirectly on a time delay between a change in state of one of the switches and a subsequent zero-crossing of a current in the resonant tank.

Such examples can be considered as a resonant converter controller that includes a regulation loop, which regulates back the power level based on a detected distance from the near capacitive mode border and is capable of maintaining a predefined distance to the (near) capacitive mode region. The distance can be used to define an error signal in order to regulate back the momentary power.

We will now provide a description of the basic idea behind the detector that detects the distance from the near capacitive mode border.

The near capacitive mode region is the region where during the non overlap time between both half cycles, insufficient energy is available to charge the switching node to the opposite supply rail as needed to maintain soft switching. This energy is determined by the capacitance Chb at the half bridge node to ground and the supply voltage Vsupply as follows:

$$W = 1/2 . Chb . Vsupply^2$$

So, in order to prevent the converter from operating in the near capacitive or capacitive mode region, it is required to have sufficient energy available larger than W in the above equation.

Related to the resonant tank the energy for charging the half bridge node is stored in the resonant tank.

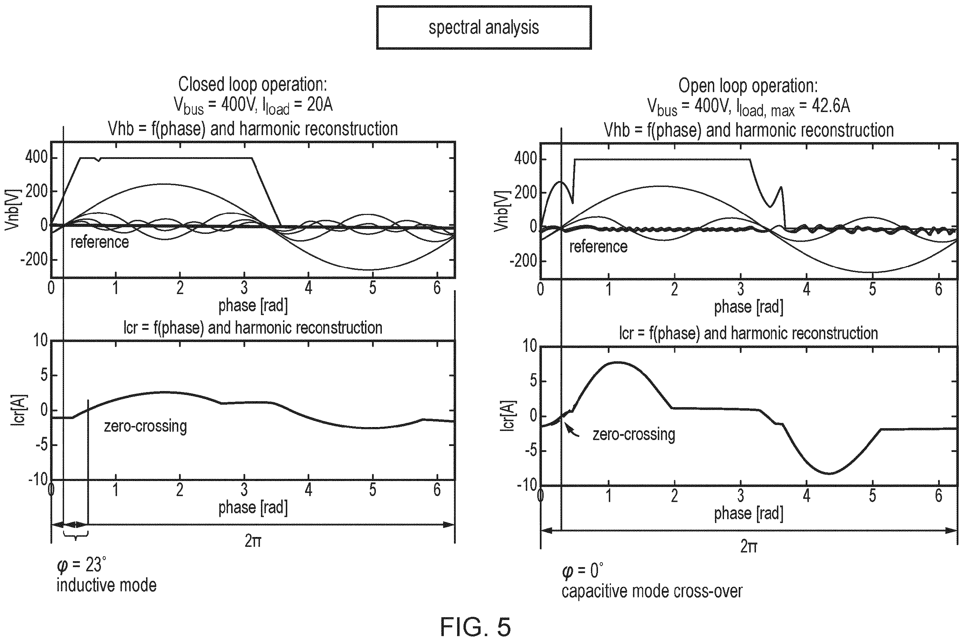

Figure 5 shows plots of the half bridge node (Vhb, upper curves) and resonant current (Icr, lower curves). For the left-hand side plots, Vbus=400V and Iload=20A, where Iload is the current through the load. For the right-hand side plots, Vbus=400V and Iload,max=42.6A.

In the near capacitive mode region, as represented by the right-hand side plots, Vhb reaches a valley or top and then falls back because Icr reaches zero and changes sign at the top or valley. There is a time delay of zero between a change in state a switch and a subsequent zero-crossing of the measured current signal. Based on the requirement that hard switching should be prevented (as occurs in the left-hand side plots), it is required to have sufficient energy available to prevent Icr reaching zero before the next half cycle is started. For the left-hand side plots, there is a time delay between a change in state of the switch and the subsequent zero-crossing of the measured current signal of 23°. That is, a phase delay of 23 degrees is taken from the spectral plot as the phase difference between: i) the instant where Vhb crosses 0; and ii) the instant where and where Icr crosses 0. Any of the time delays described herein can be expressed as an absolute value (i.e., in seconds) or as a proportion of a switching cycle or half switching cycle (e.g., in degrees or radians).

Based on that requirement, a criterion can be derived that represents a certain distance from the near capacitive mode region. The proposed criterion is related to the energy stored in the resonant inductor. The energy delivered to the half bridge capacitor is defined as:

$$W2 = \int_{t1}^{t2} Vhb \cdot Ires \, dt \tag{1}$$

Here t1 defines the moment that the first switch is opened, causing the HB node to charge towards the opposite supply rail. t2 defines the moment where the peak voltage at Chb is reached (the valley or top of the opposite supply rail voltage being reached), which is representative of a zero-crossing of the measured current signal.

Ideally, the integral between t1 and t2 can be calculated by sensing both Vhb and Ires and then using the calculated value as a representative of the distance to the near capacitive mode border.

When there is more energy available than the minimum amount required, the result will be that Vhb is kept at the supply rail while energy from the resonant tank still is delivered to the half bridge node. This basically means that the excess energy is delivered back to the supply.

Returning to Figure 3, the capacitive more distance detector output signal is the input of the capacitive mode regulator block 311, which compares the distance detector output signal to a reference value and generates the protected power signal (Pr) 312. This reference value can be set such that regulation using the protected power signal (pr) 312 results in: i) a predetermined time delay between the change in state of one of the switches and the subsequent zero-crossing of the measured current signal; or ii) a predetermined phase delay between the change in state of one of the switches and the subsequent zero-crossing of the measured current signal; or iii) a predetermined value for the integration of the measured current signal (Ires) 306 between the change in state of one of the switches and the subsequent zero-crossing of the measured current signal. Each of these alternatives can be considered as operating the resonant converter such that a predefined distance from the capacitive mode border is maintained.

The protected power signal (Pr) 312 is a regulator output that is provided to the minimum detector block 313. As discussed above, the minimum detector block 313 then takes the minimum of the normal regulator output (as represented by the power setting signal (Ps) 309) and the capacitive mode regulator (as represented by the protected power signal (Pr) 312). The result will be that during normal situations where the system operates at a sufficiently large distance from the near capacitive mode border, the normal control loop regulates the power delivered to the load.

When the distance to the near capacitive mode border gets smaller than the reference value that is used by the capacitive mode regulator block 311, the capacitive mode control loop takes over and forces the output power level below the normal power control level. The lowest level of both control loops determines the output power delivered to the load, which in this case is the capacitive mode control loop.

The second general feature includes a separate distance detection to the near capacitive mode border for both half cycles. The resonant converter can also be used asymmetrical or being asymmetrical under temporary circumstances. Due to a not yet settled symmetry loop, the situation can occur that one half cycle operates in the near capacitive mode region while the other half cycle is not.

Therefore the distance detector detects the distance for each half cycle and takes the minimum of both as the most critical distance for the capacitive mode regulator.

Another feature that can be provided by the resonant converter of Figure 3 is that a primary signal and a replica function can be applied to prevent overshoots when taking over the power control between both regulators. If the normal mode regulator 308 controls the output power as a primary signal (its control signal is the lowest of the two), then the capacitive mode regulator 311 output signal (i.e., the protected power signal (Pr) 312) can be set slightly above the normal mode regulator 308 output signal (i.e., the power setting signal (Ps) 309) instead of letting it clip to a maximum. When the situation occurs that the capacitive mode regulator 311 output signal (i.e., the protected power signal (Pr) 312) takes over control, it does not need to regulate back over a large range as this would result in a dead time and overshoot. This also holds for the other case where the capacitive mode regulator 311 is the primary signal and the normal mode regulator 308 output signal (i.e., the power setting signal (Ps) 309) can be set slightly above the capacitive mode regulator 311 output signal (i.e., the protected power signal (Pr) 312) instead of letting it clip to a maximum. When the normal mode regulator 308 takes over power control, it does not need to regulate back over a large range as this would also lead to a dead time and overshoot. In this way, a primary signal and a replica function can be applied such that the signal that defines the power is the primary signal, and the other one that follows (e.g., at a predefined distance) is the replica.

The method described with reference to Figure 3 is the most accurate representation of the measured "distance" to the near capacitive mode border. However, it can also be relatively complicated to implement. Therefore, in other embodiments simplifications are used.

The first simplification involves the removal of the Vhb signal from the integral of equation (1) above (replacing it by a constant). Therefore, the "distance" between the change in state of one of the switches and a subsequent zero-crossing of the measured current signal is defined as:

$$W2 = \int_{t1}^{t2} Ires\, dt \qquad (2)$$

A further simplification can be introduced by leaving out the Ires signal and taking that as a constant too. In this case, only the duration between t1 and t2 include the information for the distance. This is called the 'time based capacitive mode control method' as only timing information is used, which makes the digital implementation much simpler because no analogue values are needed.

An embodiment of the time based capacitive mode control method is described next. For the time based version, some additional functionality is used, as explained below, to compensate for the lack of knowledge of not taking into account the signals left out.

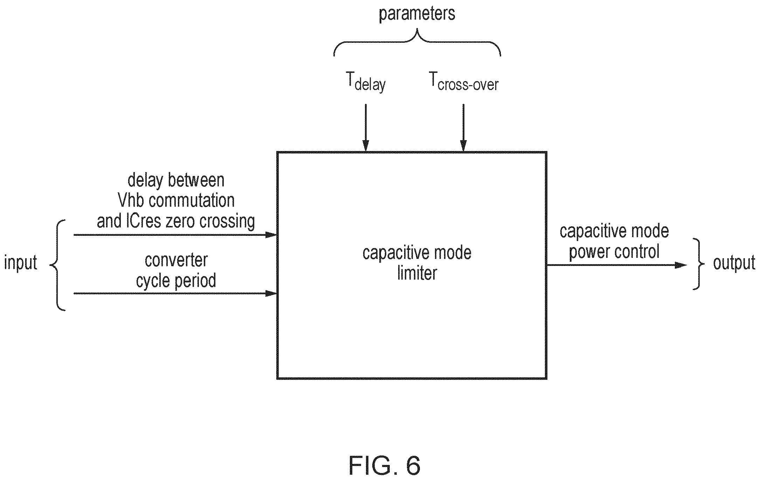

Figure 6 shows a top level block diagram of a time based capacitive mode control interface.

The main input signals, parameters and output signal are depicted and specified as follows:

- Two input signals:

    1. The minimum time of two half cycle delays, measured between the half bridge voltage commutation and primary current zero crossing.
    2. Momentary cycle period to indirectly determine the converter's DCM-CCM operating mode (discontinuous conduction mode - continuous conduction mode).

- Two parameters:

1. Tdelay specifies the minimum delay between Vhb commutation (i.e., a change in state of the first and second switches, which define the start and end of switch half cycles) and primary current zero crossing when the cycle period is equal to Tcross-over.

2. Tcross-over specifies the converter cycle period where the Tdelay parameter is used as the minimum delay between the Vhb commutation and primary current zero crossing.

- One output signal:

1. Capacitive mode power control overrules the output power control to attain the desired minimum delay between the Vhb commutation and primary current zero crossing. The capacitive mode control is only active when the power control output level is regulated below the normal power level, which can be set by an opto-coupler control loop. If the measured delay is larger than the minimum delay, the delivered output power is defined by the normal power level. In that case the capacitive mode control is not active and its power control level hovers a small distance (e.g., 0.2 = 20%) above the normal power control level.

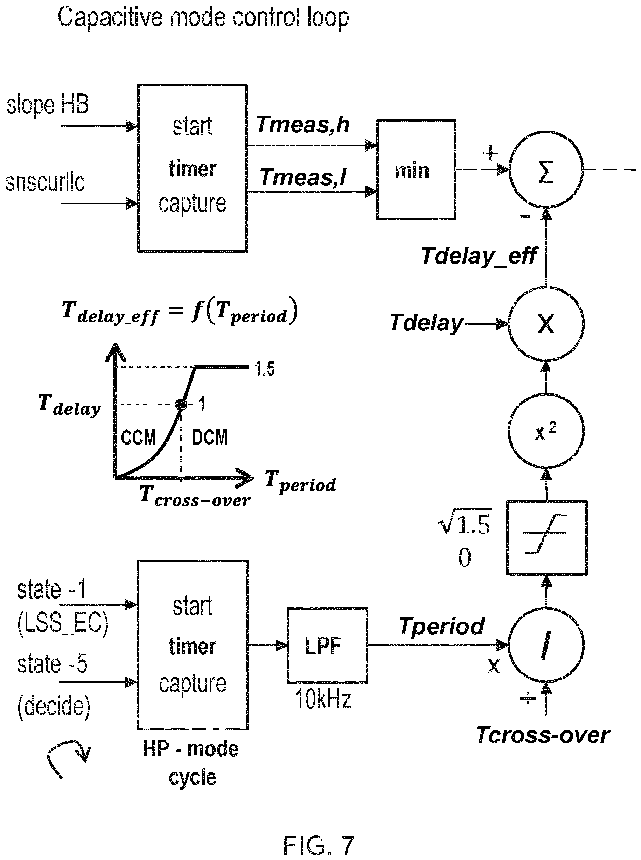

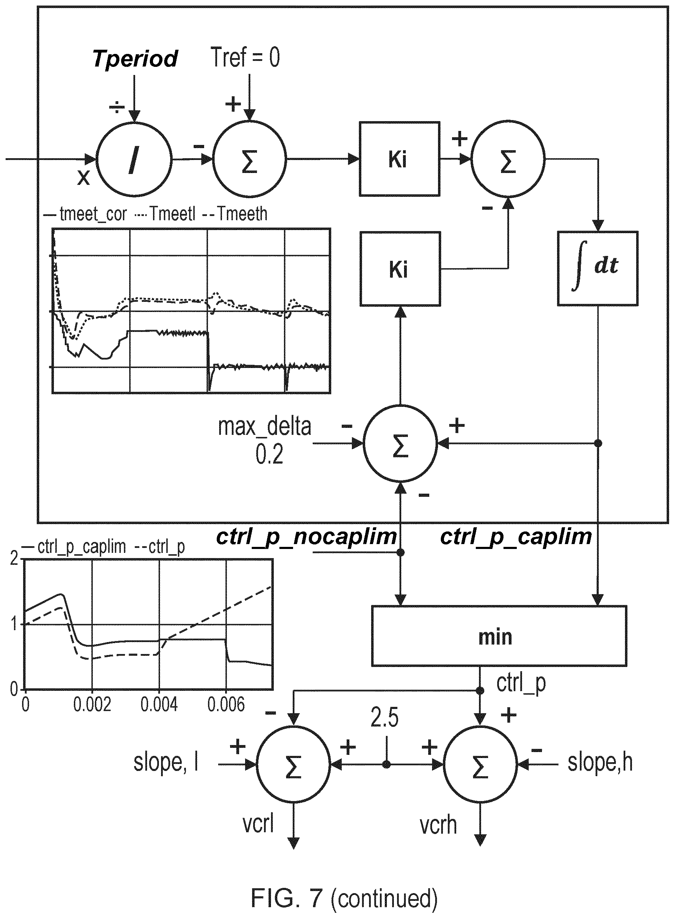

Figure 7 shows a detailed block diagram of a time based capacitive mode control loop. The diagram contains three main blocks that implement the required functionality.

- The left side block measures the converter cycle period (Tperiod) and delay between the Vhb commutation and ICres zero crossing (Tmeas,h and Tmeas,I). A timer with a resolution of e.g. 20ns starts counting on the rising and falling edge of the slope_HB signal. If the snscurllc comparator detects a zero crossing of the resonant capacitor current, the timer captures the Tmeas,h and Tmeas,I count values of both half cycles. The minimum of the two counts is considered the most critical delay for this cycle period. When there is asymmetry, one of both situations occurs first. Therefore the distance to capacitive mode is defined by the smallest value.

This means that the resonant converter can set the protected power signal (Pr) based on the lower of:

i) a time delay between a change in state the first switch and a subsequent zero-crossing of the measured current signal; and
ii) a time delay between a change in state the second switch and a subsequent zero-crossing of the measured current signal.

In an example where the distance between the change in state of the switch and the subsequent zero-crossing of the measured current signal is measured as an integral of the measured current signal over this time period, the protected power signal (Pr) can be set based on the lower of:

i) the integration of the measured current signal between the change in state of the first switch and the subsequent zero-crossing of the measured current signal; and
ii) the integration of the measured current signal between the change in state of the second switch and the subsequent zero-crossing of the measured current signal.

Furthermore, an effective minimum delay (Tdelay_eff) is determined that must be maintained between Vhb commutation and ICres current zero crossing. The effective delay (Tdelay_eff) gets subtracted from the measured delay. This results in a correction signal (Tcor) for a control loop that will maintain a minimum delay when the capacitive mode control is active. The effective delay (Tdelay_eff) depends on the converter switching period (Tperiod) and two parameters, predefined for each use case.

The crossover parameter (Tcross-over) typically defines a converter period in between CCM and DCM mode. The associated delay parameter (Tdelay) specifies the minimum delay at the crossover cycle period to prevent capacitive mode oscillations. A timer with a resolution of e.g. 20ns measures the converter cycle period. The timer starts in state-1 (LCC_EC) and captures the count value in state-5 (decide). State 1 and 5 are part of the main control state machine in a simplified model and are only used here as a reference. This produces an average measured cycle period (Tperiod), after passing a first order low pass filter with a bandwidth of e.g. 7.5kHz.

Next, a quadratic transfer function is implemented that modulates the effective delay (Tdelay_eff) as a function of the converter cycle period. First a normalized converter period is obtained by dividing the cycle period with the cross-over parameter (Tcross-over). The result is clipped such that the effective delay can only vary between zero and 1.5 * Tdelay. If the converter operates at the crossover frequency (Tperiod = Tcross-over), the effective delay corresponds exactly to the value of the Tdelay parameter.

Long cycle periods above Tcross-over are associated with DCM mode and the effective delay is increased. This mechanism creates more headroom and robustness to avoid capacitive mode oscillations. On the other hand, short cycle periods below Tcross-over are associated with CCM mode and the effective delay is reduced significantly. This time more output power can be delivered since there is more distance from capacitive mode border.

- The top right block implements a control loop that maintains a minimum delay between the Vhb commutation and ICres zero crossing. This is achieved by integrating the error that results from comparing the correction delay (Tcor) with zero (Tref). The correction delay is divided by the cycle period (normalized) to make the control loop response independent of frequency. If the correction delay is positive, the capacitive mode control is not active. In this case, the capacitive mode power control signal (ctrl_p_caplim) is forced to a level (max_delta) that e.g. hovers 20% above the normal power control signal (ctrl_p_nocaplim).
  When the correction delay drops below zero, the capacitive mode power control signal (ctrl_p_caplim) drops below the normal power control and the capacitive mode control becomes active. Now the control loop adjusts the output power such that the error injected in the integrator becomes zero. When steady state is achieved, this results in a correction delay (Tcor) of zero and hence a desired minimum delay is kept between Vhb commutation and ICres zero crossing.

- The bottom right block controls the Vcap comparator low and high levels (vcrl and vcrh). The minimum (ctrl_p) of the two power control signals adjusts the comparator levels symmetrically around a 2.5V reference. By changing the levels, the power delivered to the output is controlled.

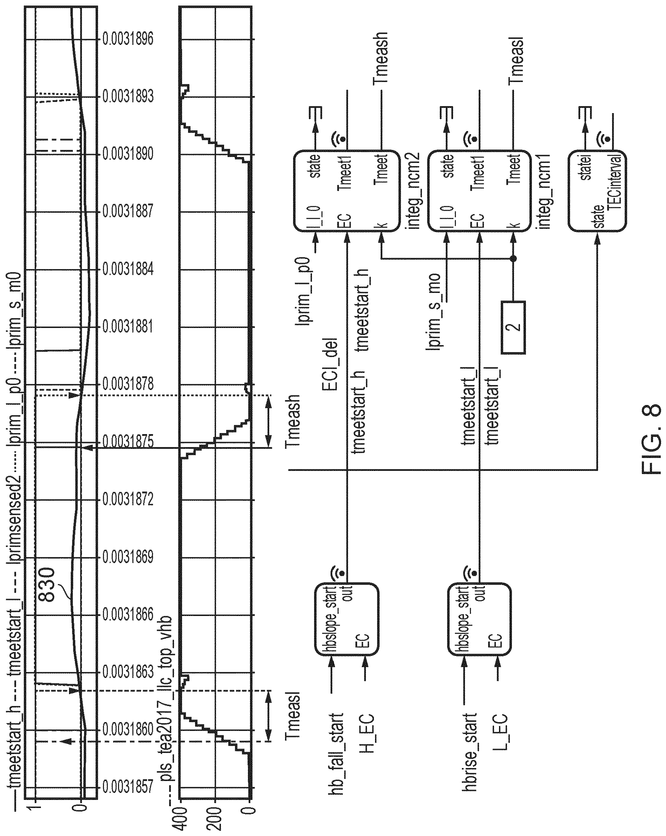

Figure 8 shows a detailed block diagram of the delay measurement setup, between Vhb commutation and ICres zero crossing. Figure 8 includes graphs of Vhb voltage (the lower plot) and ICres current (with reference 830 in the upper plot). The measured half cycle delays (Tmeasl and Tmeash) at the output of the integ_ncm state machines are also indicated in the plots.

The integ_ncms state machines implement the timers and perform some basic filtering to increase the resolution of the measured delays. For each half cycle, a start trigger (tmeasstart_h, tmeasstart_l) is generated from the half bridge falling and rising edge detectors. The Iprim_l_p0 and Iprim_s_mo capture the half cycle delays from the timers. The triggers are generated by comparing the sensed primary current with zero.

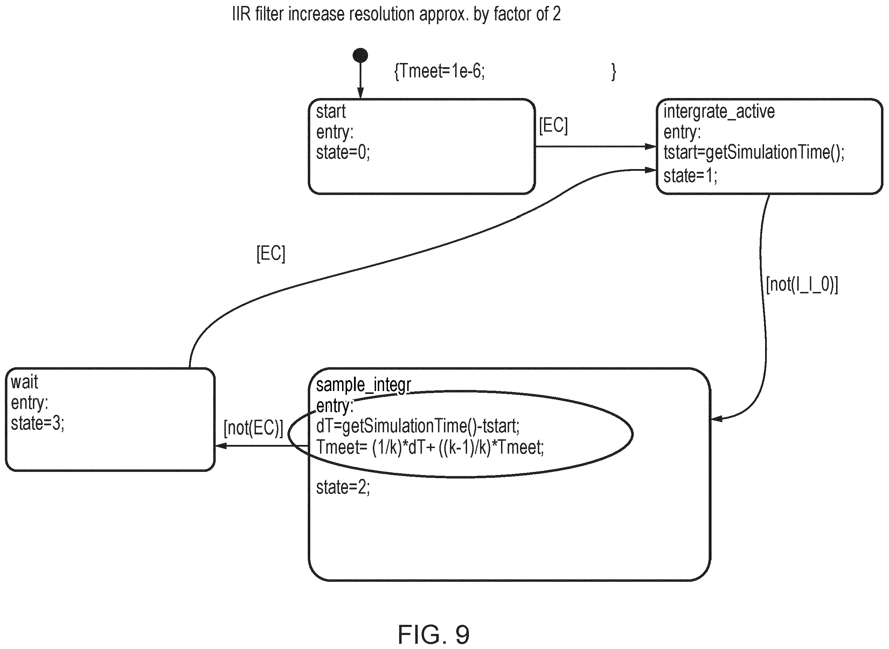

Figure 9 shows a basic implementation of a state machine that measures the delay between half bridge commutation and current zero-crossing, including filtering (IIR) to improve time resolution. The half cycle delay is measured by first capturing the start time (tstart) in state-1. State-1 is entered on the rising edge of the EC signal, associated with Vhb commutation. The delay is calculated and filtered in state-2 on the falling edge of the I_I_0 signal, associated with current zero crossing.

The half cycle delay, dT, is calculated by subtracting the previously captured tstart from the current time. The state machine executes at 20ns step time, which dictates the resolution of the measured delay. By applying a simple IIR (infinite impulse response) filter, the resolution of the half cycle delay is improved by a factor of two (k parameter is fixed at 2).

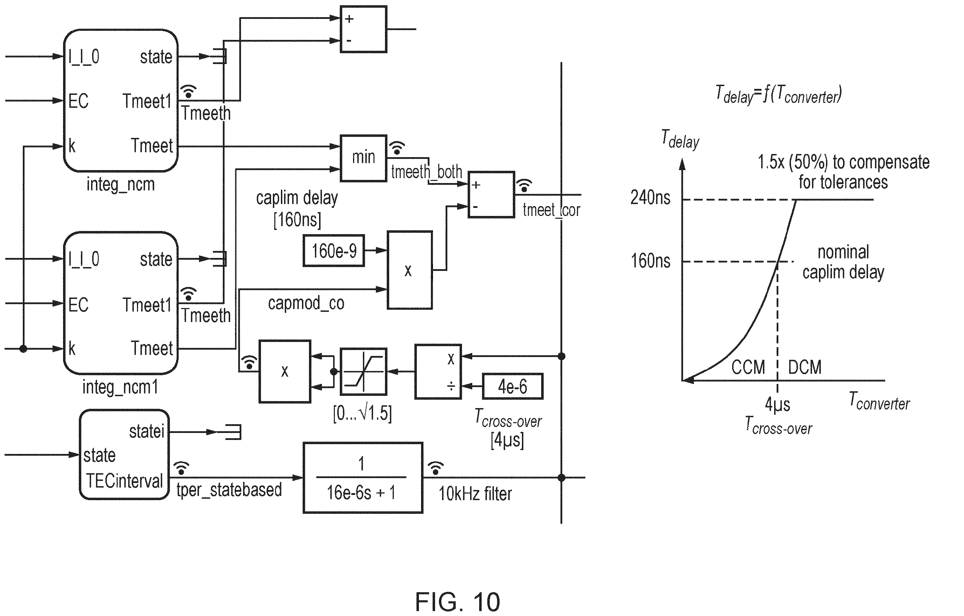

Figure 10 shows modulation of the capacitive mode minimum delay. The block diagram of Figure 10 implements the delay correction signal (tmeas_cor) that will later on be used in a control loop to prevent capacitive mode oscillations. Basically, the minimum of two half cycle delays is taken from the integ_ncm state machines and a predetermined delay is subtracted from the result to generate a delay correction signal. When the capacitive mode control loop is active, the output power will be reduced such that the delay correction gets zero. Once steady state is achieved, the delay between Vhb commutation and the zero crossing of the resonant current is equal to the predetermined delay. The minimum delay, required to prevent capacitive mode oscillations, depends on the input, output voltages and load current. When these properties change over time, the converter's DCM-CCM operating mode and cycle period dynamically adapt and settle into an appropriate steady state operating point.

A trade-off must be considered when choosing the minimum delay as a function of varying converter properties. If the minimum delay gets too small, capacitive mode oscillations might occur. Otherwise, a too large delay can severely limit the maximum output power capability of the converter. In that case, the converter might not meet the requirements of being able to deliver 150% output power.

Another aspect that plays an important role in choosing the minimum delay deals with the robustness of the time based capacitive mode control against component spread and tolerances in delays. This is one of the reasons to implement a nonlinear transfer to modulate the minimum delay, based on the actual normalized converter cycle period. Figure 10 shows an example of the transfer curve. Two parameters are used to define the curve:

- The cross-over cycle period (Tcross-over) between CCM and DCM mode. This parameter specifies the converter cycle period that normalizes to 1 by calculating the relative period as actual cycle period, divided by Tcross-over.
- The 'nominal' minimum delay (nominal caplim delay) associated with the cross-over cycle period. When the actual converter cycle period is equal to the Tcross-over period, the nominal caplim delay is used as the minimum delay criterium.

A typical converter application can temporarily deliver 150% output power at 12V. This implies a design of the resonant tank that should be able to handle 1.5x the nominal output current with sufficient headroom to avoid capacitive mode operation. The cross-over period and nominal delay parameter are approximated from converter signals when it operates close to this point.

If the Vbus input voltage drops below nominal 400V, the cycle period increases and the resonant tank operates closer to capacitive mode cross-over frequency. This resonance frequency defines the takeover point between capacitive and inductive mode. In this case, more headroom is created by increasing the minimum delay. Now the converter's actual normalized cycle period lies above one.

The minimum delay is increased by squaring the nominal period and multiplying the result with the caplim delay parameter. Since the increased delay results in a larger reduction of the delivered power, the output voltage ramps down a little faster. This is not a problem because at lower voltages the output current increases until a stable operation point is found.

If the Vbus voltage ramps up and gets back to nominal 400V, at first the cycle period also quickly decreases. As a consequence, the minimum delay significantly decreases too, which allows the converter to deliver sufficient power to quickly ramp up the output voltage. This time the normalized cycle period lies below one. By taking the square of the normalized period, the minimum delay becomes small enough to quickly return to normal operation. During the output voltage ramp up, the converter period increases and finally the minimum delay returns to its nominal value. The continuous adjustment of the minimum delay during output voltage ramp up prevents capacitive mode oscillations.

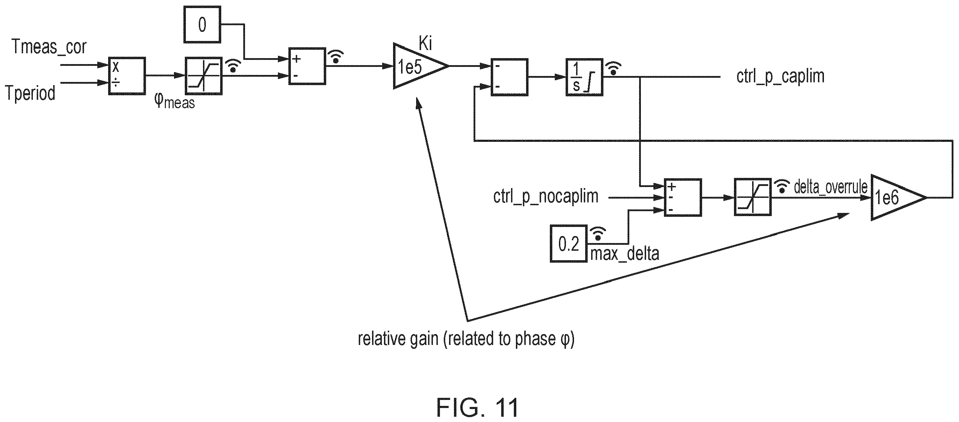

Figure 11 shows a block diagram that represents the calculation of the phase error and its integrator. The correction delay (Tmeas_cor) represents the difference between the measured and desired minimum delay. The control loop adjusts the output power (ctrl_p_caplim) of the converter until the correction delay becomes zero. The correction delay is converted into a proportional phase ($\varphi_{meas}$) that does not depend on the converter cycle period. The $K_i$ coefficients in the control loop can now be a fixed constant over a large range of operating frequencies.

The phase error, obtained by subtracting the phase ($\varphi_{meas}$) from zero, is injected here at the input of a continuous integrator with an integration constant $K_i$ of $10^5$. For a digital implementation it is required to convert the constants to their discrete counterparts:

$$K_{i,discrete} = K_i \cdot T_{sample}$$

The integrator output (ctrl_p_caplim) controls the power delivered at the output when the amplitude gets below the normal power control signal (ctrl_p_nocaplim). In that case the capacitive mode control loop is said to be active. If the correction delay is positive, the resulting phase error will increase the integrator output (ctrl_p_caplim) until it settles at a value that lies 0.2 above the normal power control level. This, in fact, will disable the capacitive mode control loop. This behaviour is arranged with an additional control loop, using the normal power control and a parameter (max_delta) to define the offset level.

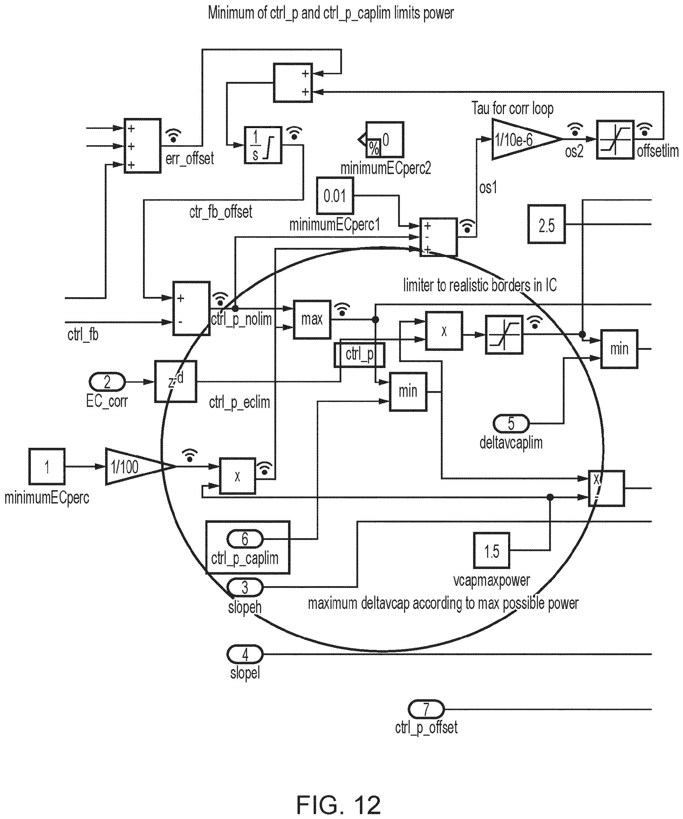

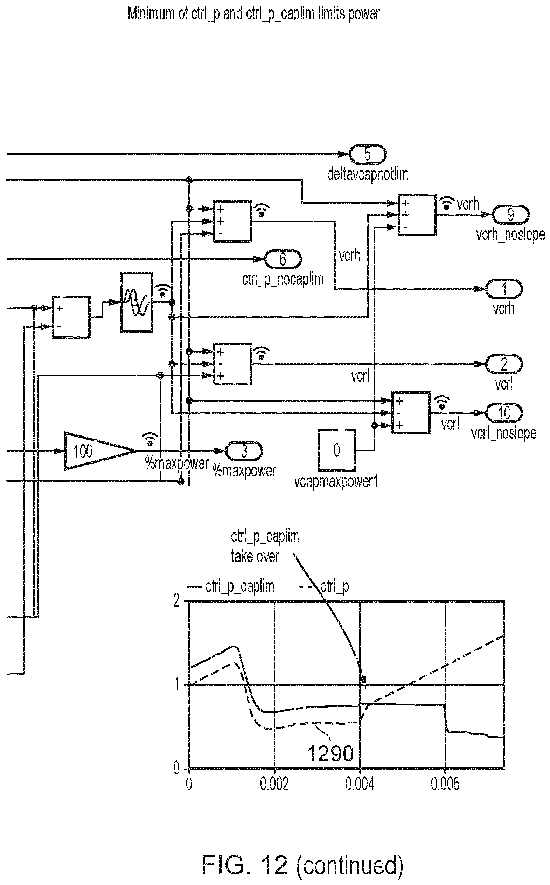

Figure 12 shows a power control block diagram. The circled area in the diagram of Figure 12 shows a basic implementation of the power control overrule mechanism for the purpose of capacitive mode prevention.

The minimum of the two power control levels (ctrl_p_caplim and ctrl_p) is taken to regulate the delivered cycle energy via the so called vcap high and low comparator levels (vcrh and vcrl).

The graph in the bottom-left corner shows the two power controls over time. During the first 4ms, the normal power control (ctrl_p, identified with reference 1290 in Figure 12) is regulating. A short time after 4ms, the capacitive mode power control (ctrl_p_caplim) takes over to avoid capacitive mode oscillations. When the opto-coupler regulates the cycle energy (ctrl_p), the inactive capacitive mode control (ctrl_p_caplim) signal hovers above the normal power control and follows the ctrl_p with an offset of 0.2. This is done to ensure a fast response of the capacitive mode control when it takes over the cycle energy regulation to prevent oscillations. During capacitive mode prevention, the normal power control (ctrl_p) linearly increases until it clips at a predetermined value. Here, the ctrl_p signal does not follow the capacitive mode control signal.

If normal conditions return, the saturated ctrl_p signal will quickly ramp down to take over the cycle energy regulation again. Typically this happens when the output voltage overshoots the desired value by some acceptable margin before returning to its intended setpoint. If ctrl_p hovers above ctrl_p_caplim by maintaining a small offset of e.g. 0.2, this will improve the output voltage overshoot.

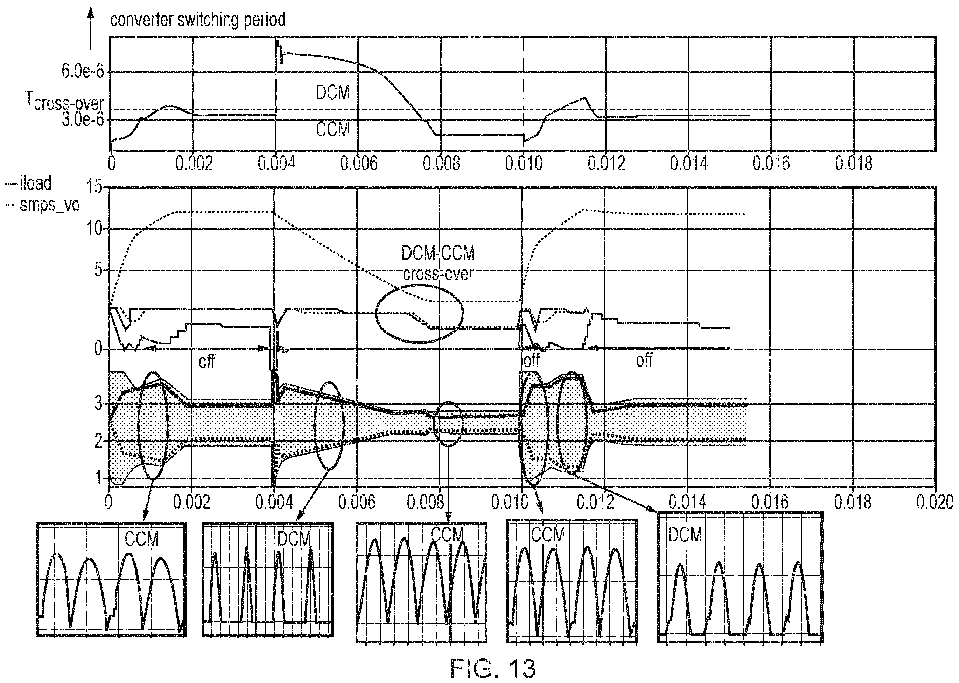

Figure 13 shows the relationship between the converter switching period and DCM-CCM mode.

It has been found that the converter typically operates in DCM mode when capacitive mode oscillations occur, close to the critical delay criterium. On the other hand, when the converter has to deliver a substantial amount of power, it operates in CCM mode and capacitive mode oscillations are much less of an issue. This observation led to the idea to create sufficient margin from capacitive mode operation by modulating the critical delay in the control loop as a function of the converter switching period. Figure 13 shows the relationship between converter switching period and DCM-CCM mode during a Vbus voltage step.

The converter starts up at a Vbus voltage of 400V, a load current of 25A and reaches 12V steady state output voltage after 4ms. During startup, the converter operates in high power CCM mode (inset bottom left graph) to quickly charge the large output capacitors and also deliver the output current. As can be depicted from the top row of the graph, the converter switching period increases towards the Tcross-over period once the output gets close to 12V. The delay in the time based capacitive mode control loop increases or decreases if the converter period operates above or below Tcross-over.

In the interval between 4ms and 10ms, the Vbus voltage drops to 250V. The converter starts operating in DCM-mode with a much longer cycle period and the control loop delay is increased significantly to avoid capacitive mode oscillations. While the output voltage **(smps_vo)** drops, the converter switching period decreases and the operating mode transitions between DCM and CCM mode. During the interval the control loop delay slowly decreases, such that the converter finally delivers an output power of 50W (2V/25A) in CCM mode and without the presence of any capacitive mode oscillations.

After 10ms the Vbus voltage returns to 400V, resulting in a smaller converter period and a control loop delay. With this short delay in CCM mode, the converter can deliver sufficient power to quickly ramp up the output voltage. Once the output voltage gets close to 12V, the converter transitions back to DCM mode. The control loop delay returns to nominal (Tdelay) due to the switching period getting closer to Tcross-over.

Examples of the present disclosure can be summarised as follows:

- Measuring the distance between the current operating point and the capacitive mode border as the time difference between the half bridge voltage (Vhb) commutation and resonant current (ICres) zero crossing for each half cycle. The lowest value of two half cycle measurements represents the current distance to the capacitive mode border.
- Determining the minimum time distance threshold, based on two parameters and the current converter switching period. This is done in the following way:

  ○ Normalizing the converter switching period by scaling with a Tcross-over parameter;
  ○ Determining the minimum time distance threshold by multiplying a Tdelay parameter with the square of the normalized switching period.

  If the converter operates above its resonance frequency, CCM mode is assumed and the minimum time threshold decreases, otherwise it increases. The Tcross-over parameter defines the cycle period at which the minimum threshold is equal to the Tdelay parameter.
- The capacitive mode control loop reduces the power output when the measured time difference drops below the minimum time threshold, thereby taking over the normal deltaV feedback loop.
- As long as the limiting conditions apply, the capacitive mode control loop keeps the converter operating at the minimum time threshold.
- When conditions allow it, the capacitive mode control loop increases the power output up to a point where the normal feedback loop automatically takes over the power control again.
- By using the same mechanisms for power control, smooth transitions between capacitive mode control and normal feedback control can be guaranteed.
- Robustness for varying Vbus and Vout voltages. With a low Vboost voltage for a longer period of time, the output current eventually increases such that the output voltage can settle at a stable level. When Vbus returns to its nominal level while Vout is still low, the converter delivers sufficient current to quickly ramp up to the nominal output voltage.
- Robustness for spread and component tolerances by modulating the minimum time threshold, based on converter cycle period with a quadratic relationship. The available power budget increases or decreases as a function of CCM-DCM mode which is indirectly derived from the converter cycle period.
- Digital implementation with a low area footprint. Delay measurement can be derived from a single clock edge with a clock (e.g. 50MHz) versus cycle frequency (500kHz) ratio of approximately 100. Digital functions can operate on low sample frequencies. Usage of simple filters with a small footprint.
- Using the time or integral of the resonant current between the mentioned interval.
- The idea of detecting a distance from the non-capacitive mode region and ways to define that distance and use that to regulate back the actual power.

- The idea of detecting a distance to the capacitive mode border specific for each half cycle and using the minimum of two half cycles to generate an error signal.
- The idea of using the resonant capacitor voltage (sampled peak value versus actual value where the difference between both is used to generate an error signal).
- The method of using the criterion 'Vhb crosses alpha x Vbus' in relation to a capacitive mode control to get a measurement of the point where the state of one of the switches changes.

Examples disclose herein involve the detection of near capacitive mode by using a capacitive mode distance signal based on t1 and t2 (where t1 is the time at which the state of one of the switches changes, and t2 is the time at which a subsequent zero-crossing of the measured current signal occurs), which is used to define the distance to capacitive mode border in three ways:

- t2-t1 as a time difference directly;
- the integral of Ires over the interval t1,t2; and
- the integral of Ires x Vhb over the interval t1,t2.

The time method measures the time difference between the half bridge commutation and resonant current zero crossing for both half cycles. The smallest time difference of two half cycle measurements can be used to represent the distance to the capacitive mode border. As an alternative, the time difference can be converted into a proportion (phase) of a switch cycle, and the controller can set the protected power signal (Pr) based on the proportion (phase) of the switch cycle.

The integral / area method captures the area under the resonant current graph, starting from the moment the half cycle finishes until the resonant current crosses zero. The area represents the distance to the capacitive mode border.

When the converter operating point approaches a predefined distance to the capacitive mode border, the capacitive mode control loop takes over the normal control loop to reduce the output power until steady state is achieved. If limiting conditions are removed, the output power is gradually increased until the normal power control loop takes over the output power regulation.

Examples disclosed herein can provide one or more of the following advantages:

- Ensure at all time that the converter operates in inductive mode region, resulting in safe and stable operation with zero voltage switching.
- Measure the operating point proximity to capacitive mode border based on methods that consider time or area requirements.
- Prevent capacitive mode instability by reducing the output power via the normal power control mechanism.

The likelihood of unstable capacitive mode operation can be reduced by adding a capacitive mode prevention control function. Measuring the distance to the capacitive mode border can be based on time (phase) or area (charge) information.

Examples disclosed herein can address problems associated with the prior art by regulating the power back such that sufficient distance occurs to the non capacitive mode border while the system (including the symmetry loop) remains under stable control because of vcap control being maintained for both half cycles.

A short summary of the capacitive mode prevention method key features is presented below.

1. A resonant converter controller including a regulation loop that reduces the power level based on a detected distance from the near capacitive mode border capable of maintaining a predefined distance to the so-called (near) capacitive mode region. The distance defining an error signal in order to regulate back the momentary power.

2. Feature 1, including a separate detection distance to the near capacitive mode border for both half cycles (taking the smallest of the two measured distances).

3. Feature 1,2 where the detected distance is based on the integral of the resonant current between the moment of finishing the half cycle by the half cycle finishing criterion (Vcap, time duration) and the moment that the primary current crosses zero.

4. Feature 1,2 where the detected distance is based on the time difference between the moment of finishing the half cycle by the half cycle finishing criterion (Vcap, time duration) and the moment that the primary current crosses zero.

5. Feature 3,4 including the method of replacing the criterion of the 'half cycle finishing by the criterion 'Vhb crosses alpha x Vbus'.

6. Feature 5 where alpha = 0.5.

7. Feature 3,4,6 where, as a measure of 'the moment that the primary current crosses zero', the sampled peak value of the voltage across the resonant capacitor (or voltage at one side of the resonant capacitor) is taken. In this case the

EP 4 546 633 A1

distance is based on a difference between the actual resonant capacitor voltage and the sampled peak value of the resonant capacitor voltage.

8. Feature 1-5 where the predefined distance to the capacitive mode border quadratically depends on the normalized converter switching frequency and a reference delay.

9. Feature 7 where the converter maintains a predefined distance to capacitive mode border while the output voltage is dropping. During this transient, the converter switching period decreases, thereby increasing the output current until steady state operation is achieved.

10.Feature 8 where the Vbus voltage returns to nominal while the converter is operating at a predefined distance to the capacitive mode border. The Vbus transient will quickly decrease the converter switching period even further, thereby generating sufficient output current to quickly raise the output voltage to its nominal level. During the last part of the transient, the switching period slowly increases until the normal control loop takes over power regulation.

11.Feature 9 where the capacitive mode control loop implementation only requires an I-regulator to maintain a constant bandwidth when active. The bandwidth can be optimized to achieve good step response when capacitive mode limiting conditions apply. In this case, a short burst of capacitive mode oscillations can be avoided, due to fast reaction speed of the control loop.

12. Feature 3 where the capacitive mode prevention control uses a time based method to prevent capacitive mode oscillations. With this method, a straightforward and simple digital implementation can be realized because measuring time in digital domain is easy to do.

13. Feature 10 where a signal is added to indicate that the capacitive mode loop is active to a restart, latch the system or initiate a warning.

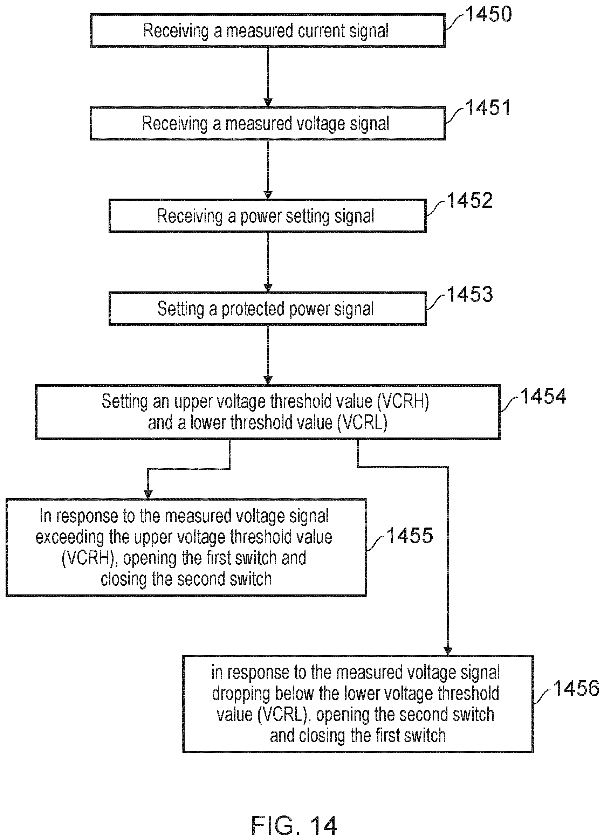

Figure 14 shows an example embodiment of a method of operating a resonant converter according to the present disclosure.

The resonant converter is for supplying electrical energy from a supply source to a load, and it comprises:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and

a resonant tank that is electrically connected to the first and second switches, wherein the resonant tank comprises a resonant capacitor.

At step 1450, the method includes receiving a measured current signal that represents the current flowing in the resonant tank. At step 1451, the method includes receiving a measured voltage signal that represents the voltage at a predetermined point in the resonant tank. At step 1452, the method includes receiving a power setting signal (e.g., via a normal mode regulator), which defines a requested power level for the load. It will be appreciated that each of these steps could be performed in any order or simultaneously.

At step 1453, the method involves setting a protected power signal based on a time delay between a change in state of one of the switches and a subsequent zero-crossing of the measured current signal (e.g., via a capacitive mode regulator). As discussed above, the protected power signal can be set such that its application will result in the resonant converter avoiding a capacitive mode of operation. That is: to avoid the current in the resonant tank reaching zero before the end of a switch half cycle. Furthermore, the protected power signal can be set such that its application results in a fixed "distance" between the end of the switch half cycle and the next zero-crossing of the measured current signal. Alternatively, the protected power signal can be set such that its application results in an adaptive "distance" between the end of the switch half cycle and the next zero-crossing of the measured current signal, whereby the adaptive distance can be set based on a measured cycle / switching period, for example. Either way, such a "distance" can be represented by a time delay, or it can be represented as the value of an integration of the current in the resonant tank between: a change in state of one of the switches and a subsequent zero-crossing of the current in the resonant tank.

At step 1454, the method involves setting an upper voltage threshold value (VCRH) and a lower threshold value (VCRL) based on the lower of: i) the protected power signal; and ii) the power setting signal.

Then, at step 1455, in response to the measured voltage signal exceeding the upper voltage threshold value (VCRH), the method involves opening the first switch and closing the second switch. Similarly, in response to the measured voltage signal dropping below the lower voltage threshold value (VCRL), at step 1456 the method involves opening the second switch and closing the first switch.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

16

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A controller for a resonant converter, wherein the resonant converter is for supplying electrical energy from a supply source to a load, the resonant converter comprising:

   a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and
   a resonant tank that is electrically connected to the first and second switches, wherein the resonant tank comprises a resonant capacitor; wherein the controller is configured to:
   receive a measured current signal that represents the current flowing in the resonant tank;
   receive a measured voltage signal that represents the voltage at a predetermined point in the resonant tank;
   receive a power setting signal, which defines a requested power level for the load;
   set a protected power signal based on a time delay between a change in state of one of the switches and a subsequent zero-crossing of the measured current signal;
   set an upper voltage threshold value and a lower threshold value based on the lower of: i) the protected power signal; and ii) the power setting signal;
   in response to the measured voltage signal exceeding the upper voltage threshold value, open the first switch and close the second switch; and
   in response to the measured voltage signal dropping below the lower voltage threshold value, open the second switch and close the first switch.

2. The controller of claim 1, wherein the protected power signal corresponds to a power level at which the measured voltage signal will intersect: the upper voltage threshold value during the high-side switch half cycle; and the lower voltage threshold value during the low-side switch half cycle.

3. The controller of claim 1 or claim 2, wherein the protected power signal is set such that its application results in:

a fixed distance between the end of a switch half cycle and the next zero-crossing of the measured current signal; or

an adaptive distance between the end of a switch half cycle and the next zero-crossing of the measured current signal.

4. The controller of claim 3, wherein the distance is represented by a time delay.

5. The controller of claim 3, wherein the distance is represented as the value of an integration of the measured current signal between: the time at which the state of one of the switches changes; and the time at which the measured current signal next crosses zero.

6. The controller of any preceding claim, further configured to:
set the protected power signal based on the lower of:

i) a time delay between a change in state the first switch and a subsequent zero-crossing of the measured current signal; and
ii) a time delay between a change in state the second switch and a subsequent zero-crossing of the measured current signal

7. The controller of claim 1 or claim 2, wherein operation of the resonant converter according to the protected power signal results in a predetermined time delay between the change in state of one of the switches and the subsequent zero-crossing of the measured current signal.

8. The controller of claim 1 or claim 2, wherein operation of the resonant converter according to the protected power signal results in a predetermined phase delay between the change in state of one of the switches and the subsequent zero-crossing of the measured current signal, wherein the phase delay corresponds to a proportion of a switch cycle.

9. The controller of claim 1 or claim 2, wherein the controller is further configured to:
set the protected power signal based the integration of the measured current signal between: the time at which the state of one of the switches changes state; and the time at which the measured current signal next crosses zero.

10. The controller of claim 9, wherein operation of the resonant converter according to the protected power signal results in a predetermined value for the integration of the measured current signal between: the time at which the state of one of the switches changes; and the time at which the measured current signal next crosses zero.

11. The controller of claim 9 or claim 10, further configured to set the protected power signal based on the lower of:

i) the integration of the measured current signal between: the time at which the state of the first switch changes; and the time at which the measured current signal next crosses zero; and
ii) the integration of the measured current signal between: the time at which the state of the second switch changes; and the time at which the measured current signal next crosses zero.

12. The controller of claim 11, configured to set the protected power signal based on the lower of:

i) the integration of the measured current signal between: the time at which the first switch is opened; and the time at which the measured current signal next crosses zero; and
ii) the integration of the measured current signal between: the time at which the second switch is opened; and the time at which the measured current signal next crosses zero.

13. The controller of any preceding claim, configured to:

convert the time delay into a detected proportion of a switch cycle; and
set the protected power signal based on the detected proportion of the switch cycle.

14. A resonant converter comprising the controller of any preceding claim.

15. A method of operating a resonant converter, wherein the resonant converter is for supplying electrical energy from a supply source to a load, the resonant converter comprising:

a first switch and a second switch connected in series with each other between the supply source and a reference terminal, wherein the resonant converter has a high-side switch half cycle when the first switch is closed and the second switch is open, and wherein the resonant converter has a low-side switch half cycle when the first switch is open and the second switch is closed; and

a resonant tank that is electrically connected to the first and second switches, wherein the resonant tank comprises a resonant capacitor;

wherein the method comprises:

receiving a measured current signal that represents the current flowing in the resonant tank;
receiving a measured voltage signal that represents the voltage at a predetermined point in the resonant tank;
receiving a power setting signal, which defines a requested power level for the load;
setting a protected power signal based on a time delay between a change in state of one of the switches and a subsequent zero-crossing of the measured current signal;
setting an upper voltage threshold value and a lower threshold value based on the lower of: i) the protected power signal; and ii) the power setting signal;
in response to the measured voltage signal exceeding the upper voltage threshold value, opening the first switch and closing the second switch; and
in response to the measured voltage signal dropping below the lower voltage threshold value, opening the second switch and closing the first switch.

**Amended claims in accordance with Rule 137(2) EPC.**

1. A controller (301) for a resonant converter (300), wherein the resonant converter is for supplying electrical energy from a supply source to a load, the resonant converter comprising:

   a first switch (302) and a second switch (303) connected in series with each other between the supply source (304) and a reference terminal (305), wherein the resonant converter has a high-side switch half cycle when the first switch is closed and the second switch is open, and wherein the resonant converter has a low-side switch half cycle when the first switch is open and the second switch is closed; and
   a resonant tank that is electrically connected to the first and second switches, wherein the resonant tank comprises a resonant capacitor (Cr); wherein the controller is configured to:
   receive a measured current signal (Ires) that represents the current flowing in the resonant tank;
   receive a measured voltage signal (Vcr) that represents the voltage at a predetermined point in the resonant tank;
   receive a power setting signal (Ps), which defines a requested power level for the load;
   set a protected power signal (Pr) based on a time delay between a change in state of one of the switches and a subsequent zero-crossing of the measured current signal;
   set an upper voltage threshold value (VCRH) and a lower threshold value (VCRL) based on the lower of: i) the protected power signal; and ii) the power setting signal;
   in response to the measured voltage signal exceeding the upper voltage threshold value, open the first switch and close the second switch; and
   in response to the measured voltage signal dropping below the lower voltage threshold value, open the second switch and close the first switch.

2. The controller of claim 1, wherein the protected power signal corresponds to a power level at which the measured voltage signal will intersect: the upper voltage threshold value during the high-side switch half cycle; and the lower voltage threshold value during the low-side switch half cycle.

3. The controller of claim 1 or claim 2, wherein the protected power signal is set such that its application results in:

   a fixed distance between the end of a switch half cycle and the next zero-crossing of the measured current signal; or
   an adaptive distance between the end of a switch half cycle and the next zero-crossing of the measured current signal.

4. The controller of claim 3, wherein the distance is represented by a time delay.

5. The controller of claim 3, wherein the distance is represented as the value of an integration of the measured current signal between: the time at which the state of one of the switches changes; and the time at which the measured current signal next crosses zero.

6. The controller of any preceding claim, further configured to:
set the protected power signal based on the lower of:

i) a time delay between a change in state the first switch and a subsequent zero-crossing of the measured current signal; and
ii) a time delay between a change in state the second switch and a subsequent zero-crossing of the measured current signal

7. The controller of claim 1 or claim 2, wherein operation of the resonant converter according to the protected power signal results in a predetermined time delay between the change in state of one of the switches and the subsequent zero-crossing of the measured current signal.

8. The controller of claim 1 or claim 2, wherein operation of the resonant converter according to the protected power signal results in a predetermined phase delay between the change in state of one of the switches and the subsequent zero-crossing of the measured current signal, wherein the phase delay corresponds to a proportion of a switch cycle.

9. The controller of claim 1 or claim 2, wherein the controller is further configured to:
set the protected power signal based the integration of the measured current signal between: the time at which the state of one of the switches changes state; and the time at which the measured current signal next crosses zero.

10. The controller of claim 9, wherein operation of the resonant converter according to the protected power signal results in a predetermined value for the integration of the measured current signal between: the time at which the state of one of the switches changes; and the time at which the measured current signal next crosses zero.

11. The controller of claim 9 or claim 10, further configured to set the protected power signal based on the lower of:

i) the integration of the measured current signal between: the time at which the state of the first switch changes; and the time at which the measured current signal next crosses zero; and
ii) the integration of the measured current signal between: the time at which the state of the second switch changes; and the time at which the measured current signal next crosses zero.

12. The controller of claim 11, configured to set the protected power signal based on the lower of:

i) the integration of the measured current signal between: the time at which the first switch is opened; and the time at which the measured current signal next crosses zero; and
ii) the integration of the measured current signal between: the time at which the second switch is opened; and the time at which the measured current signal next crosses zero.

13. The controller of any preceding claim, configured to:

convert the time delay into a detected proportion of a switch cycle; and
set the protected power signal based on the detected proportion of the switch cycle.

14. A resonant converter comprising the controller of any preceding claim.

15. A method of operating a resonant converter (300), wherein the resonant converter is for supplying electrical energy from a supply source to a load, the resonant converter comprising:

a first switch (302) and a second switch (303) connected in series with each other between the supply source (304) and a reference terminal (305), wherein the resonant converter has a high-side switch half cycle when the first switch is closed and the second switch is open, and wherein the resonant converter has a low-side switch half cycle when the first switch is open and the second switch is closed; and
a resonant tank that is electrically connected to the first and second switches, wherein the resonant tank comprises a resonant capacitor (Cr); wherein the method comprises:
receiving a measured current signal (Ires) that represents the current flowing in the resonant tank;

receiving a measured voltage signal (Vcr) that represents the voltage at a predetermined point in the resonant tank;

receiving a power setting signal (Ps), which defines a requested power level for the load;

setting a protected power signal (Pr) based on a time delay between a change in state of one of the switches and a subsequent zero-crossing of the measured current signal;

setting an upper voltage threshold value (VCRH) and a lower threshold value (VCPL) based on the lower of: i) the protected power signal; and ii) the power setting signal;

in response to the measured voltage signal exceeding the upper voltage threshold value, opening the first switch and closing the second switch; and

in response to the measured voltage signal dropping below the lower voltage threshold value, opening the second switch and closing the first switch.

$V_{out}$

SR Controller

$C_{res}$

PFC and LLC Combo Controller

Active Bridge Controller

FIG. 1

FIG. 2

EP 4 546 633 A1

Switches driven by charge difference between beginning and end of halfcycle

FIG. 2 (continued)

FIG. 3

EP 4 546 633 A1

FIG. 4

FIG. 5

parameters

$T_{delay}$    $T_{cross-over}$

input {
delay between
Vhb commutation
and ICres zero crossing

converter
cycle period

capacitive mode
limiter

capacitive mode
power control

} output

FIG. 6

## Capacitive mode control loop

$$T_{delay\_eff} = f(T_{period})$$

FIG. 7

FIG. 7 (continued)

FIG. 8

EP 4 546 633 A1

IIR filter increase resolution approx. by factor of 2

FIG. 9

FIG. 10

FIG. 11

FIG. 12

Minimum of ctrl_p and ctrl_p_caplim limits power

FIG. 12 (continued)

FIG. 13

EP 4 546 633 A1

```
┌─────────────────────────────────────┐  ⌐1450
│   Receiving a measured current signal │
└─────────────────────────────────────┘
                    │
                    ▼
┌─────────────────────────────────────┐  ⌐1451
│   Receiving a measured voltage signal │
└─────────────────────────────────────┘
                    │
                    ▼
┌─────────────────────────────────────┐  ⌐1452
│     Receiving a power setting signal  │
└─────────────────────────────────────┘
                    │
                    ▼
┌─────────────────────────────────────┐  ⌐1453
│     Setting a protected power signal  │
└─────────────────────────────────────┘
                    │
                    ▼
┌───────────────────────────────────────────┐  ⌐1454
│  Setting an upper voltage threshold value (VCRH) │
│     and a lower threshold value (VCRL)      │
└───────────────────────────────────────────┘
```

In response to the measured voltage signal exceeding the upper voltage threshold value (VCRH), opening the first switch and closing the second switch ⌐1455

in response to the measured voltage signal dropping below the lower voltage threshold value (VCRL), opening the second switch and closing the first switch ⌐1456

FIG. 14

European Patent Office

Europäisches Patentamt
European Patent Office
Office européen des brevets

# EUROPEAN SEARCH REPORT

Application Number

EP 23 20 5701

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/033998 A1 (HALBERSTADT HANS [NL]) 11 February 2010 (2010-02-11) * paragraphs [0007], [0008], [0027] – [0029], [0032] – paragraphs [0036] – [0045], [0054], [0059], [0063]; figures 2, 3, 4a, 4b * | 1-15 | INV. H02M3/335 H02M3/337 H02M3/00 H02M1/00 |
| A | US 2011/187335 A1 (GRAKIST ALFRED [NL] ET AL) 4 August 2011 (2011-08-04) * paragraph [0009]; figures 1, 2 * | 1-15 | |
| A | US 7 944 716 B2 (NXP BV [NL]) 17 May 2011 (2011-05-17) * column 10; figures 7-9 * | 1-15 | |
| A | US 8 427 847 B2 (HALBERSTADT HANS [NL]; NXP BV [NL]) 23 April 2013 (2013-04-23) * column 2; figure 2 * | 1-15 | |

TECHNICAL FIELDS SEARCHED (IPC)

H02M

The present search report has been drawn up for all claims

| Place of search | Date of completion of the search | Examiner |
|---|---|---|
| The Hague | 21 March 2024 | Zeljkovic, Sandra |

EPO FORM 1503 03.82 (P04C01)

## ANNEX TO THE EUROPEAN SEARCH REPORT
## ON EUROPEAN PATENT APPLICATION NO.

EP 23 20 5701

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | | Publication date | Patent family member(s) | | | Publication date |
|---|---|---|---|---|---|---|---|
| US 2010033998 | A1 | | 11-02-2010 | CN | 101164221 | A | 16-04-2008 |
| | | | | EP | 1869758 | A1 | 26-12-2007 |
| | | | | JP | 2008535455 | A | 28-08-2008 |
| | | | | US | 2010033998 | A1 | 11-02-2010 |
| | | | | WO | 2006103606 | A1 | 05-10-2006 |
| US 2011187335 | A1 | | 04-08-2011 | CN | 101803164 | A | 11-08-2010 |
| | | | | EP | 2201669 | A1 | 30-06-2010 |
| | | | | US | 2011187335 | A1 | 04-08-2011 |
| | | | | WO | 2009037613 | A1 | 26-03-2009 |
| US 7944716 | B2 | | 17-05-2011 | EP | 1869759 | A2 | 26-12-2007 |
| | | | | JP | 2008535456 | A | 28-08-2008 |
| | | | | US | 2008266908 | A1 | 30-10-2008 |
| | | | | WO | 2006103609 | A2 | 05-10-2006 |
| US 8427847 | B2 | | 23-04-2013 | CN | 102257714 | A | 23-11-2011 |
| | | | | EP | 2380268 | A1 | 26-10-2011 |
| | | | | US | 2011242856 | A1 | 06-10-2011 |
| | | | | WO | 2010073196 | A1 | 01-07-2010 |

EPO FORM P0459

For more details about this annex : see Official Journal of the European Patent Office, No. 12/82